# EUROPEAN PATENT SPECIFICATION

(11) **EP 0 632 205 B1**
(45) Date of publication and mention of the grant of the patent: **06.11.1996**
(21) Application number: 94109226.4
(22) Date of filing: 15.06.1994
(51) Int. Cl.: F16B 5/02, H04N 5/645

(54) **Device for joining two parts**
Vorrichtung zum Verbinden zweier Teile
Dispositif pour joindre deux pièces

(30) Priority: 02.07.1993 FI 933055
(43) Date of publication of application: 04.01.1995
(73) Proprietor: NOKIA TECHNOLOGY GmbH, 75175 Pforzheim (DE)
(72) Inventor: Väisänen, Vesa, SF-24280 Salo (FI)

(56) References cited:
- EP-A- 0 302 026
- FR-A- 2 570 769
- FR-A- 2 590 633
- US-A- 2 805 597

## Description

The invention relates to an automatically adjusting device for joining two items without clearance or mutual compressive stress, whereby the distance between the fixing points of the items and their mutual location can vary.

The device according to the invention adjusts automatically so that the distance between the items to be joined can vary, whereby the device adjusts to a suitable length without additional means. The device can also prevent compression stress between the items. The device is further formed so that the items to be joined can be at a varying mutual distance from the fixing points.

The patent FI 86572 (EP-A-0302026) discloses an automatically adjusting device for locking two parts to each other when the distance between the fixing points can vary. The device of this patent comprises a tubular part 14 and a cylindrical part 26 which slides but cannot rotate within the part 14. This patent uses flexible means 40, 52, with the aid of which the part 26 can be lifted against the support 12. The parts to be joined are fixed by a screw 38 providing the joint between the parts 26 and 14. The device according to this patent is complex and contains many separate parts, so that it is expensive and difficult to manufacture.

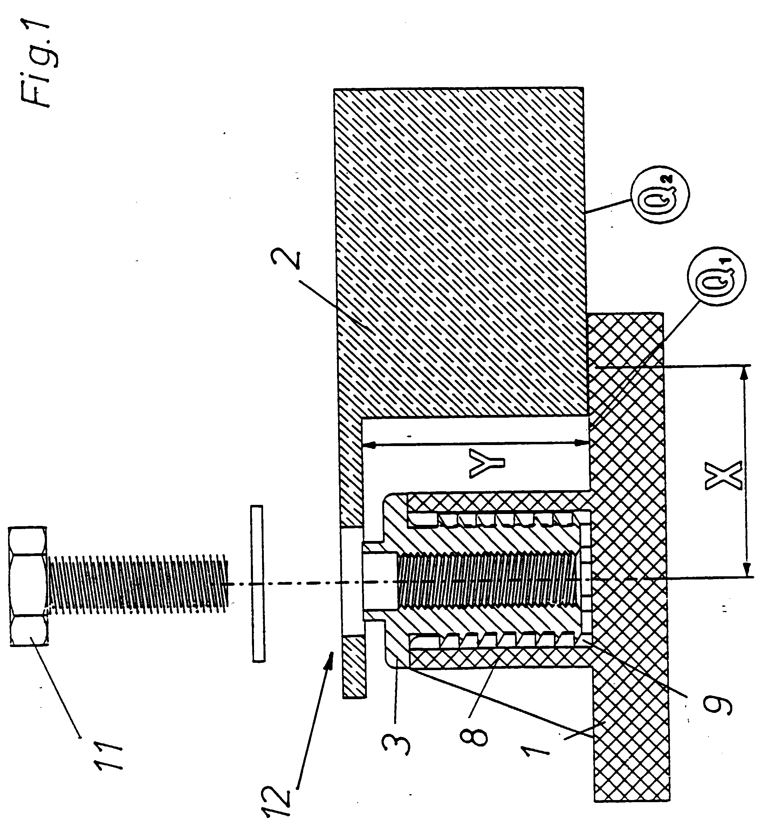

The device according to the invention is simple, durable and advantageous to manufacture. The device can obviate problems relating to joints, in which the surfaces to be joined are located outside the fixing point and in which the fixing points are located at different distances from the surfaces. This situation is illustrated in figure 1, to which we return later.

The device according to the invention was developed mainly to fasten the picture tube of a television or of a monitor to its housing, but this device can also be applied to other types of joints and in other technical fields.

The characteristics of the invention are presented in the enclosed claims.

The invention is described in more detail below with reference to the figures, in which:
figure 1 shows the device according to the invention in a side sectional elevation at the joint between parts 1 and 2;
figure 2 shows the device according to the invention in a side sectional elevation in the locking position;
figure 3 shows the part 3 of the device according to the invention; and

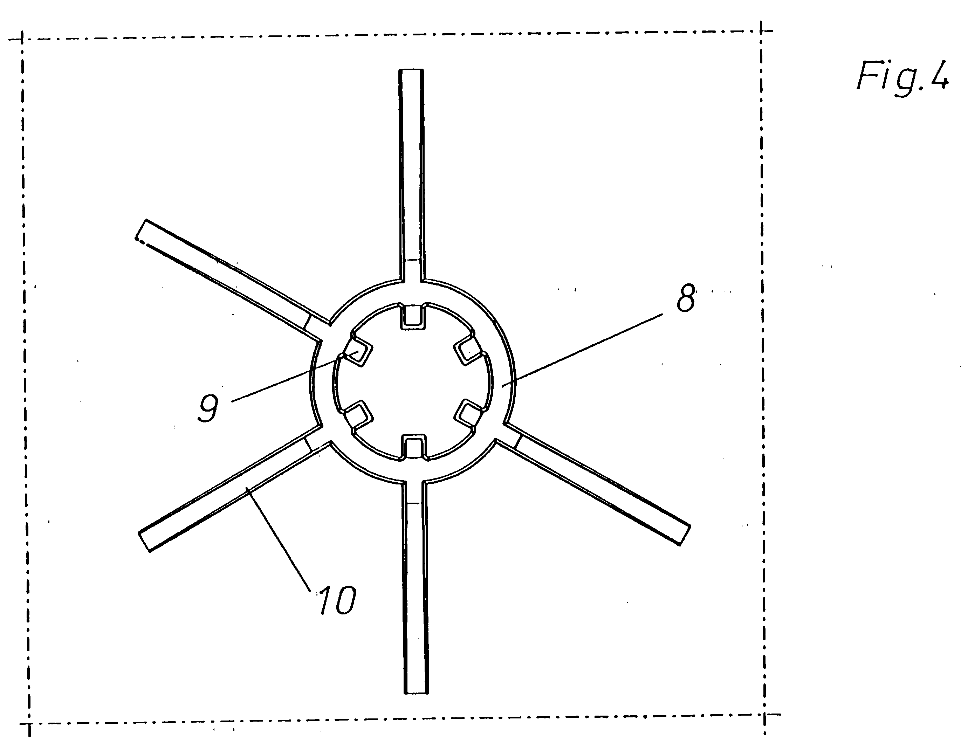

figure 4 shows an embodiment of the parts 8 and 9 of the device according to the invention as seen from above.

The object is to join the surfaces Q1 and Q2 shown in figure 1 with the aid of the device according to the invention, so that between the surfaces there will be no excessive compression which possibly would damage the surfaces or leave a clearance between them. The distance (marked as Y in figure 1) between the fixing points can vary, and the sur faces to be joined can be at a varying distance (marked as X in figure 1) from the fixing points. Thus the device according to the invention can join parts with varying tolerances. The device according to the invention is particularly advantageous when the picture tube of a television or of a monitor is fastened to its housing. The compression in the joint between the picture tube and the housing causes distortion of the housing and tension between the parts. On the other hand, a clearance in the joint causes a faulty appearance of the structure. Particularly the tolerances of the picture tube may vary even several millimeters due to manufacturing technology.

In the flange of the part 2 comprising the surface Q2 there is a fixing hole 12, which is used to join the part 2 and the part 1 with the device according to the invention comprising a cylindrical part 3, which can be axially arranged within the tubular part 8. The tubular part 8 is fixed in relation to the part 1, and preferably the parts 1 and 8 are made by casting them as a combination. The part 1 is preferably a part of the housing, in which the picture tube of a television or monitor is fastened.

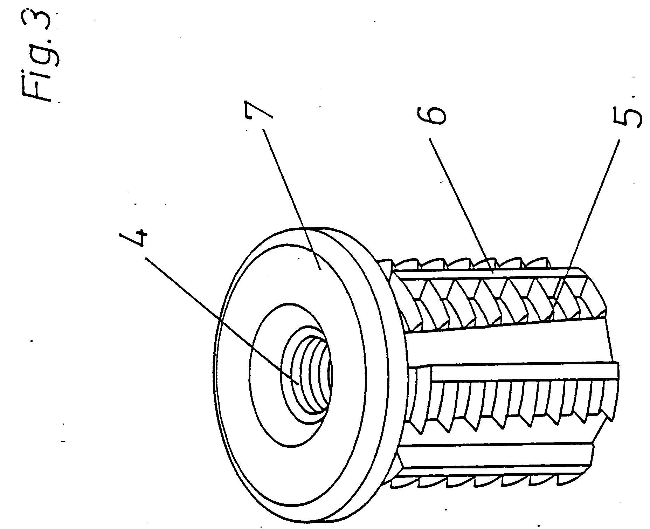

The device of the present invention comprises a detachable cylindrical part 3, which is shown in detail in figure 3. The cylindrical part 3 has an axial bore with an inner surface 4, which preferably is threaded. On the periphery of the part 3 there are cutting profiles 5 at equal distances, which profiles are formed by several superimposed sharp blades with sharp outer edges. There could be e.g. six profiles at equal distances on the periphery of the part 3. Each distance could be e.g. 18°, and each profile 5 could span 42°. There may be about 3 to 10 blades on top of each other, preferably eight blades. At one edge the profiles are closed by a partition wall 6 parallel with the axis of the cylindrical part 3. The other edge of the cutting profile is at a certain angle to the axis of the cylindrical part 3 in order to reduce the shearing force. Preferably the angle is e.g. about 3°. At one end of the part 3 there is a collar-like flange 7.

The cylindrical part 3 is adapted inside the tubular part 8 of the part 1 forming the surface Q1. Inside the tubular part 8 there are longitudinal projections 9, which are interleaved with the profiles 5 on the periphery of the cylindrical part 3 when the cylindrical part 3 is placed inside the tubular part 8. At the projections 9 the tubular part 8 can have outer radial supports 10 in order to stabilize the construction and to support the part 8 against the part 1.

In the second embodiment of the invention the cutting profiles are formed on the inner surface of the tubular part 8, and the longitudinal projections are formed on the periphery of the cylindrical part 3.

The object of the device according to the invention is to join the parts 1 and 2 so that the surfaces Q1 and Q2 join, and so that no clearance nor compressive stress is created between the surfaces. According to the invention this is achieved so that the cylindrical part 3 is placed within the tubular part 8 of the part 1, so that the profiles 5 overlap the projections 9. The part 2 is moved on the part 1 so that the surfaces Q1 and Q2 will join. The fastening screw 11 is screwed through the hole 12 in the flange of the part 2 into the threads of the part 3, whereby the part 3 will rise without rotation toward the flange of the part 2. It is also possible to use a self-threading screw, whereby no threads are needed in the axial bore of part 3. Rotation of the part 3 is prevented by the friction difference between the part 3 and the screw 11 and with the aid of the profiles of part 3 and the projections 9 of part 8. When the flange 7 of part 3 abuts the flange 12 of part 2, the linear movement upward of part 3 will stop, and the movement changes into rotation due to the friction forces of the screw 11, the part 2 and the part 3, whereby the part 3 will rotate with the screw 11. When the cylindrical part 3 rotates within the tubular part 8 the cutting profiles 5 make spaces in the projections 9 of the part 8. The rotation ends at least at the partition wall 6 located at one end of the profiles 5 of part 3 when the projections 9 abut them, or the motion of the screw rotation device according to the invention provided with torque limitation will stop when the torque requirement increases.

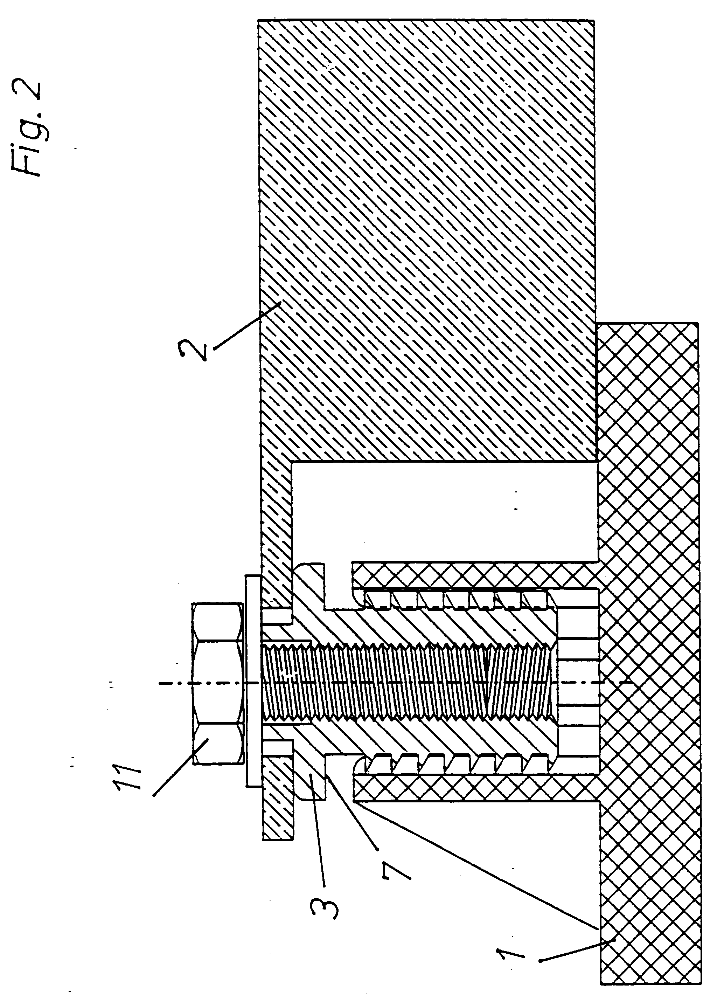

The final result is a fixed joint according to figure 2, in which the parts 1 and 2 are joined without clearance or compression between the surfaces Q1 and Q2. In figure 2 we see how the screw is threaded in the internal threads of part 3, and at the same time raises the part 3 so high that its flange 7 abuts the flange of part 2. Thus the device according to the invention enables the compensation of any variation in the distance Y.

The device can be made of metal or plastic. However, the cutting Profiles must be of harder material than the projections. In the same way the material of the screws 11 must be harder than the material of the axial bore in the part 3 in that embodiment where the axial bore is not threaded and a self-threading screw is used.

## Claims

1. Automatically adjusting device for locking two items to each other, whereby the items have fixing points, the distance between which can vary, and whereby the items have parts (1,2) with surfaces to be joined, the location of which can vary in relation to the fixing points, the device comprising a first part (1) attached to the first item to be joined, a tubular part (8) attached to the first part (1), a cylindrical part (3) axially movable within the tubular part (8) and having a central axial bore (13) to receive a screw (11), with which the second part (2) through a fixing hole in it is fixed to the first part (1) via said cylindrical part (3), whereby the cylindrical part (3) and the corresponding tubular part (8) have radially projecting, axially disposed, mutually interleaved projections (5, 9), characterized in that said projections of one of said cylindrical and tubular parts (3, 8) comprise cutting profiles (5), which comprise several circumferential sharp blades located at certain distances from each other and provided with sharp outer edges which cut into the projections (9) of the other of said cylindrical and tubular parts (3, 8) as the cylindrical part (3) tends to rotate with the screw (11) on the cylindrical part's (3) axial movement caused by the screw (11).

2. Device according to claim 1, characterized in that the cutting profiles (5) are formed at the periphery of the cylindrical part (3).

3. Device according to claim 1, characterized in that the cutting profiles (5) are formed at the inner surface of the tubular part (8).

4. Device according to any previous claim, characterized in that the profiles (5) are closed at one edge by an axial partition wall (6) of the part (3, 8).

5. Device according to claim 1, characterized in that the tubular part (8) has radial supports (10) on its periphery.

6. Device according to claim 2, characterized in that one edge of the cutting profile (5) forms a certain angle to the axis of the cylindrical part (3).

7. Device according to claim 3, characterized in that one edge of the cutting profile (5) forms a certain angle to the axis of the tubular part (8).

8. Device according to claim 6 or 7, characterized in that the angle is about 3°.

9. Device according to claim 2 or 3, characterized in that there are six profiles (5) at said certain distances.

10. Device according to claim 1, characterized in that the screw (11) is self-threading.

## Patentansprüche

1. Sich automatisch einstellende Vorrichtung zum Verblocken von zwei Objekten miteinander, bei der die Objekte Befestigungspunkte aufweisen, deren Abstand voneinander variieren kann, und die Objekte Teile (1, 2) mit aneinander anzuschließenden Oberflächen aufweisen, deren Lage im Verhältnis zu den Befestigungspunkten variieren kann, und zwar umfaßt die Vorrichtung einen ersten Teil (1), der an dem ersten zu verbindenden Objekt angebracht ist, einen an dem ersten Teil (1) angebrachten rohrförmigen Teil (8), einen zylindrischen Teil (3), der innerhalb des rohrförmigen Teils (8) axial beweglich ist und eine axiale Mittelbohrung (13) zur Aufnahme einer Schraube (11) aufweist, mit deren Hilfe der zweite Teil (2) durch ein darin vorgesehenes Befestigungsloch hindurch über den besagten zylindrischen Teil (3) an dem ersten Teil (1) befestigt ist, wobei der zylindrische Teil (3) und der entsprechende rohrförmige Teil (8) radial vorspringende, axial angeordnete und ineinander eingreifende Vorsprünge (5, 9) aufweisen, dadurch gekennzeichnet, daß die besagten Vorsprünge eines der besagten zylindrischen und rohrförmigen Teile (3, 8) schneidende Profile (5) aufweisen, die mehrere in gewissen Abständen voneinander angeordnete scharfe periphere Klingen umfassen und mit scharfen Außenkanten versehen sind, die in die Vorsprünge (9) des anderen der besagten zylindrischen und rohrförmigen Teile (3, 8) eindringen, während der zylindrische Teil (3) dazu neigt, sich bei der durch die Schraube (11) verursachten Axialbewegung des zylindrischen Teils (3) gemeinsam mit der Schraube (11) zu drehen.

2. Vorrichtung nach Anspruch 1, dadurch gekennzeichnet, daß die schneidenden Profile (5) am Umfang des zylindrischen Teils (3) geformt sind.

3. Vorrichtung nach Anspruch 1, dadurch gekennzeichnet, daß die schneidenden Profile (5) an der inneren Oberfläche des rohrförmigen Teils (8) geformt sind.

4. Vorrichtung nach einem der vorstehenden Ansprüche, dadurch gekennzeichnet, daß die Profile (5) an einem Rand durch eine axiale Trennwand (6) des Teiles (3, 8) begrenzt sind.

5. Vorrichtung nach Anspruch 1, dadurch gekennzeichnet, daß der rohrförmige Teil (8) an seinem Umfang radiale Stützelemente (10) aufweist.

6. Vorrichtung nach Anspruch 2, dadurch gekennzeichnet, daß eine Kante des schneidenden Profils (5) mit der Achse des zylindrischen Teils (3) einen gewissen Winkel bildet.

7. Vorrichtung nach Anspruch 3, dadurch gekennzeichnet, daß eine Kante des schneidenden Profils (5) mit der Achse des rohrförmigen Teils (8) einen gewissen Winkel bildet.

8. Vorrichtung nach Anspruch 6 oder 7, dadurch gekennzeichnet, daß der Winkel etwa 3° beträgt.

9. Vorrichtung nach Anspruch 2 oder 3, dadurch gekennzeichnet, daß in besagten gewissen Abständen sechs Profile (5) vorgesehen sind.

10. Vorrichtung nach Anspruch 1, dadurch gekennzeichnet, daß die Schraube (11) selbstschneidend ist.

## Revendications

1. Dispositif de réglage automatique pour verrouiller entre eux deux éléments, de manière que les éléments présentent des points de fixation, la distance entre eux pouvant varier, et de manière que les éléments présentent des parties (1, 2) ayant des surfaces à relier, dont l'emplacement peut varier par rapport aux points de fixation, le dispositif comprenant une première partie (1) fixée au premier élément à relier, une partie tubulaire (8) fixée à la première partie (1), une partie cylindrique (3) déplaçable axialement dans la partie tubulaire (8) et ayant un alésage axial (13) central pour loger une vis (11), à l'aide de laquelle la deuxième partie (2) ayant en son sein un trou de fixation est fixée à la première partie (1) via ladite partie cylindrique (3), de manière que la partie cylindrique (3) et la partie tubulaire (8) correspondante présentent des saillies (5, 9) se projetant radialement, disposées axialement, imbriquées l'une dans l'autre, caractérisé en ce que lesdites saillies de l'une desdites parties cylindriques et tubulaires (3, 8) comprennent des profils de coupe (5), comportant plusieurs lames tranchantes circonférentielles, situées à des distances déterminées les unes des autres et pourvues de bords extérieurs tranchants qui peuvent couper les saillies (9) de l'autre partie parmi lesdites parties cylindriques et tubulaires (3, 8), lorsque la partie cylindrique (3) a tendance à tourner conjointement avec la vis (11), lorsqu'un mouvement axial de la partie cylindrique (3) est provoqué par la vis (11).

2. Dispositif selon la revendication 1, caractérisé en ce que les profils de coupe (5) sont formés sur la périphérie de la partie cylindrique (3).

3. Dispositif selon la revendication 1, caractérisé en ce que les profils de coupe (5) sont formés sur la surface intérieure de la partie tubulaire (8).

4. Dispositif selon l'une quelconque des revendications précédentes, caractérisé en ce que les profils (5) sont fermés au niveau d'un bord, par une paroi de séparation axiale de la partie (3, 8).

5. Dispositif selon la revendication 1, caractérisé en ce que la partie tubulaire (8) présente des supports radiaux (10) sur sa périphérie.

6. Dispositif selon la revendication 2, caractérisé en ce qu'un bord du profil de coupe (5) forme un angle déterminé avec l'axe de la partie cylindrique (3).

7. Dispositif selon la revendication 3, caractérisé en ce qu'un bord du profil de coupe (5) forme un angle déterminé avec l'axe de la partie tubulaire (8).

8. Dispositif selon la revendication 6 ou 7, caractérisé en ce que l'angle est d'à peu près 3°.

9. Dispositif selon la revendication 2 ou 3, caractérisé en ce qu'il existe six profils (5) situés auxdites distances déterminées.

10. Dispositif selon la revendication 1, caractérisé en ce que la vis (11) est auto-taraudeuse.
